# DEMANDE DE BREVET EUROPEEN

(11) **EP 4 512 242 A1**
(43) Date de publication de la demande: **26.02.2025**
(21) Numéro de dépôt: 24193170.8
(22) Date de dépôt: 06.08.2024
(51) Int. Cl.: A01K 61/55, A01K 61/54

(54) **DISPOSITIF DE CONCHYLICULTURE ET PROCEDE ASSOCIE**

(30) Priorité: 24.08.2023 FR 2308912
(71) Demandeur: Compagnie Legris, 29880 Plouguerneau (FR)
(72) Inventeur: LEGRIS, Adrien, 29880 PLOUGUERNEAU (FR)
(74) Mandataire: Brevalex

(57) **Abrégé**

Dispositif (1) de conchyliculture comprenant :
- une structure de support (50)
- un premier casier (10.1) définissant un premier volume interne (16.1)
- un deuxième casier (10.4, 10.7) définissant un deuxième volume interne (16.4, 16.7) dans lequel
un premier élément de flottaison passif est placé dans le premier casier (10.1) de manière à pouvoir se déplacer librement dans le premier volume interne (16.1) et/ou un deuxième élément de flottaison passif est placé dans le deuxième casier (10.4, 10.7) de manière à pouvoir se déplacer librement dans le deuxième volume interne (16.4, 16.7).

## Description

### DOMAINE TECHNIQUE

L'invention se rapporte au domaine de la conchyliculture et plus particulièrement à l'élevage des huitres en casier.

### ÉTAT DE LA TECHNIQUE ANTÉRIEURE

Il existe plusieurs techniques d'élevage de coquillages parmi lesquelles l'élevage en suspension qui consiste à suspendre des poches ou des cordes contenant des huîtres juvéniles à des structures flottantes ou fixes en surface de l'eau. Les huîtres se nourrissent du phytoplancton dans l'eau et peuvent être régulièrement exposées à l'air libre lors de période d'exondation. Cela permet une croissance rapide, mais les huîtres sont vulnérables aux intempéries et aux variations environnementales.

Dans l'élevage au sol, les huîtres sont directement en contact avec le fond marin, où elles se nourrissent de phytoplancton. Cette technique est simple et économique, mais expose les huîtres aux prédateurs et aux risques d'envasement.

Dans l'élevage en surélévation, les huîtres sont placées dans des poches ou casiers en filet ou en matériau poreux, qui sont ensuite fixées à des structures immergées de type table ou « longline » disposés dans des zones peu profondes de l'eau. Cette technique évite le contact direct avec le substrat du fond marin, réduisant les risques de prédation tout en permettant un meilleur contrôle des conditions environnementales et en facilitant la gestion et la récolte. Malgré des coûts d'installation initiaux élevés, ce type d'élevage connaît un fort développement. Une bonne qualité organoleptique et mécanique (épaisseur et structure de la coquille) des huitres requiert des opérations de brassage et de roulage des huitres.

Le roulage consiste à déplacer physiquement les huîtres dans leur environnement d'élevage, en les faisant rouler sur le substrat (fond marin ou support artificiel). Cette opération simule le mouvement naturel causé par les marées et la houle, où les huîtres sont alternativement exposées à l'air et à l'eau.

Le roulage a pour objectif :
- de favoriser la croissance uniforme des huîtres en leur donnant un accès équitable aux ressources trophiques, stimuler le développement des muscles adducteurs en reproduisant les mouvements de fermeture des coquilles ;
- de parfaire la forme de la coquille en développement et de la durcir ;
- d'empêcher l'encroûtement excessif de sédiments et d'algues ;
- prévenir les risques d'infections ou d'infestations par des parasites en perturbant leur fixation.

Le brassage implique la création de mouvements d'eau artificiels, naturels ou l'agitation de l'eau dans l'enceinte d'élevage des huîtres. Cela peut être réalisé à l'aide de pompes, de systèmes de circulation d'eau, du vent, de la houle ou de l'effet des marées elles-mêmes. L'objectif principal du brassage est de fournir un apport régulier d'oxygène, de nutriments et de particules alimentaires aux huîtres. Le brassage permet :
- d'améliorer la filtration des huîtres en maintenant un flux constant de particules en suspension et phytoplancton.
- De favoriser une croissance plus rapide grâce à un accès constant aux nutriments.
- De prévenir les risques d'anoxie en maintenant une concentration suffisante d'oxygène dissous dans l'eau.
- D'assurer une distribution homogène des conditions environnementales dans tout l'élevage.

Les opérations de roulage sont classiquement réalisées à la main dans les élevages en poche sur table. Les poches sont secouées et retournées mensuellement sur les tables. Il existe également un dispositif connu sous le nom de « casier australien » dans lequel les huitres sont placées à l'intérieur de casiers suspendus à une structure de support. Ces casiers sont articulés sur la traverse et le brassage est ainsi réalisé par la houle et le vent dans l'eau de subsurface. Ces casiers présentent l'avantage de réduire les opérations de roulage, mais les mouvements ainsi provoqués sont insuffisants pour assurer un roulage optimal des huitres. Il est alors nécessaire d'assurer les opérations de roulage à la main ou de renoncer aux effets positifs du roulage, qui impliquent notamment de séparer et trier manuellement, après récolte, les huitres en fonction de leur taille et diminue la qualité et dureté des coquillages. Les opérations manuelles de tri sont couteuses et une partie de la production est rebutée, ce qui dégrade le rendement économique de l'exploitation.

### OBJET DE L'INVENTION

L'invention a pour but d'améliorer le rendement d'un dispositif de conchyliculture.

### EXPOSÉ DE L'INVENTION

A cet effet, on prévoit un dispositif de conchyliculture comprenant une structure de support comprenant une première traverse et une deuxième traverse sensiblement parallèles. Un premier casier définit un premier volume interne et est monté à rotation relativement à la première traverse. Un deuxième casier définit un deuxième volume interne et est monté à rotation relativement à la deuxième traverse. Selon l'invention, un premier élément de flottaison passif est placé dans le premier casier de manière à pouvoir se déplacer librement dans le premier volume interne et provoquer une rotation du premier casier lorsque celui-ci est au moins partiellement immergé et/ou un deuxième élément de flottaison passif est placé dans le deuxième casier de manière à pouvoir se déplacer librement dans le deuxième volume interne et provoquer une rotation du deuxième casier lorsque celui-ci est au moins partiellement immergé.

Au sens de la présente demande, un élément est un élément passif de flottaison lorsqu'il n'est pas utile d'intervenir dessus (gonflage/purge/remplissage) pour pouvoir en provoquer la flottaison. En d'autres termes, sa capacité de flottaison est permanente et n'est pas commandée au contraire d'autres dispositifs tels que, par exemple, un ballast.

On obtient alors un dispositif de conchyliculture qui, en exploitant l'effet marémoteur des marées, évite d'avoir à réaliser manuellement les opérations de roulage et favorise le brassage des coquillages. Les opérations de roulage sont plus fréquentes et permettent d'obtenir une meilleure qualité de coquillages. Les rendements et la qualité des coquillages ainsi obtenus sont améliorés tout en réduisant le volume d'opérations humaines.

Selon d'autres modes de réalisation particuliers, non exclusifs et optionnels de l'invention :
- le premier élément de flottaison comprend une pluralité de flotteurs ;
- les flotteurs sont de forme sphérique et/ou en matière synthétique, préférentiellement du Polyéthylène Haute Densité ;
   - le premier casier étant monté de manière à ce qu'un premier point distal du premier casier décrive une première trajectoire circulaire de premier rayon ; et le deuxième casier étant monté de manière à ce qu'un deuxième point distal du deuxième casier décrive une deuxième trajectoire circulaire de deuxième rayon ; la distance séparant la première traverse et la deuxième traverse est au moins égale à la somme du premier rayon et du deuxième rayon ;
- la première traverse et la deuxième traverse sont situées dans un même premier plan horizontal lorsque le dispositif est en appui sur un plan horizontal ;
- la première traverse et la deuxième traverse sont situées dans deux plans horizontaux distincts lorsque le dispositif est en appui sur un plan horizontal ;
- la structure de support comprend une troisième traverse et une quatrième traverse, le dispositif comprenant également un troisième casier définissant un troisième volume interne et qui est monté à rotation relativement à la troisième traverse ;
- un quatrième casier définissant un quatrième volume interne et qui est monté à rotation relativement à la quatrième traverse; dans lequel un troisième élément de flottaison passif est placé dans le troisième casier de manière à pouvoir se déplacer librement dans le troisième volume interne et provoquer une rotation du troisième casier lorsque celui-ci est au moins partiellement immergé ; et un quatrième élément de flottaison passif est placé dans le quatrième casier de manière à pouvoir se déplacer librement dans le quatrième volume interne et provoquer une rotation du quatrième casier lorsque celui-ci est au moins partiellement immergé ;
   - la structure de support est dimensionnée de manière à ce que sa masse exerce un effort statique au moins égal à la poussée de flottaison maximale exercée sur le dispositif ;
   - la structure de support est agencée pour être empilable et possède une longueur sensiblement égale à trois mètres et une largeur sensiblement égale à 1,2 mètres.

L'invention concerne également un procédé d'élevage conchylicole de coquillages placés dans le premier casier et le deuxième casier d'un dispositif tel que décrit ci-dessus, dans lequel des opérations roulage des coquillages sont réalisées par le déplacement du premier élément de flottaison à l'intérieur du premier volume interne et par le déplacement du deuxième élément de flottaison à l'intérieur du deuxième volume interne lors des phases d'immersion et d'émersion du premier casier et du deuxième casier.

D'autres caractéristiques et avantages de l'invention apparaîtront à la lecture de la description qui suit d'un mode de réalisation particulier non limitatif de l'invention.

### BRÈVE DESCRIPTION DES DESSINS

Il sera fait référence aux figures jointes parmi lesquelles :
[Fig. 1] est une représentation schématique en perspective d'un support du dispositif selon l'invention ;
[Fig. 2] est une représentation schématique en perspective du dispositif selon l'invention ;
[Fig. 3] est une représentation schématique en plan du dispositif de la figure 2 ;
[Fig. 4] est une représentation schématique en coupe transversale du dispositif de la figure 2 dans un deuxième état ;
[Fig. 5] est une représentation schématique en coupe transversale du dispositif de la figure 2 dans un troisième état ;
[Fig. 6] est une représentation de détail schématique en coupe transversale du dispositif de la figure 2 dans une première phase de transition ;
[Fig. 7] est une représentation de détail schématique en coupe transversale du dispositif de la figure 2 dans une deuxième phase de transition ;
[Fig. 8] est une représentation schématique en coupe transversale du dispositif de la figure 2 dans un quatrième état ;
[Fig. 9] est une représentation schématique en coupe transversale du dispositif de la figure 2 dans un cinquième état.

### EXPOSÉ DÉTAILLÉ DE MODES DE RÉALISATION PARTICULIERS

En préliminaire, il est indiqué que les termes « horizontal » et « vertical » sont utilisés en référence au dispositif lorsqu'il repose sur un appui plan horizontal tel que représenté sur les figures. Ces termes sont utilisés pour faciliter la description et ne sont nullement limitatifs.

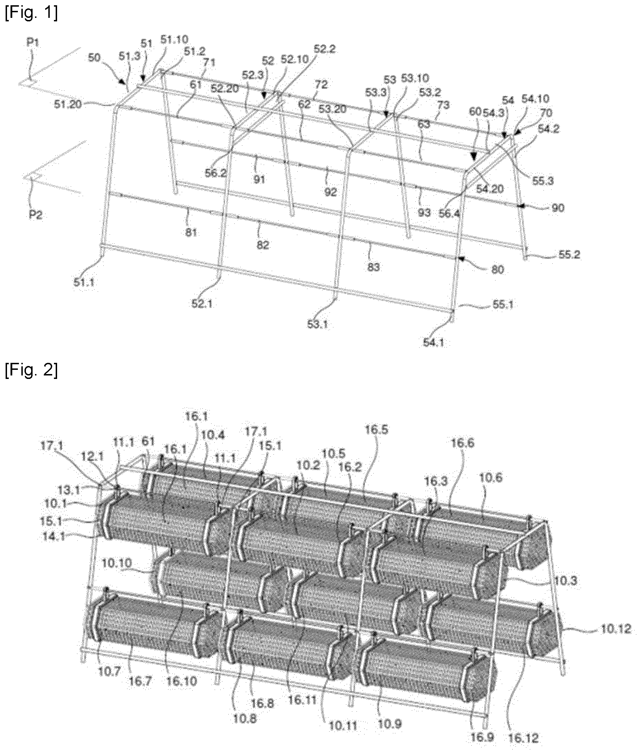

En référence aux figures 1 et 2, le dispositif de conchyliculture selon l'invention et généralement désigné 1, comprend douze casiers 10.1 à 10.12 montés sur une structure de support 50. La structure 50 comprend quatre portiques 51, 52, 53 et 54 en acier rond crénelé, ici de vingt millimètres de diamètre et espacés l'un de l'autre d'une distance sensiblement égale à neuf cent millimètres. Le portique 51 comprend deux pieds 51.1 et 51.2, s'étendant selon un angle sensiblement égal à quinze degrés par rapport à la verticale, et qui sont reliés respectivement en des coins 51.10 et 51.20 à une âme 51.3 horizontale. Les portiques 52, 53 et 54 sont identiques et comprennent respectivement des pieds 52.1, 52.2, 53.1, 53.2, 54.1, 54.2 et des âmes 52.3, 53.3 et 54.3. Les portiques 51 à 54 sont, ici, réalisés par cintrage d'un rond d'acier.

Les portiques 51 à 52 sont reliés l'un à l'autre par trois fers horizontaux 55. Un premier fer 55.1 est rapporté par soudage à proximité des extrémités libres des pieds 51.1, 52.1, 53.1 et 54.1. Similairement, un deuxième fer 55.2 est rapporté par soudage à proximité des extrémités libres des pieds 51.2, 52.2, 53.2 et 54.2. Un troisième fer 55.3 relie par soudage les milieux des âmes 51.3, 52.3, 53.3 et 54.3. Enfin le portique 52 comprend un quatrième fer 56.2 de contreventement qui relie les pieds 42.1 et 52.2. Le portique 54 comprend, de manière similaire un cinquième fer 56.4 de contreventement.

La structure 50 peut, préférentiellement avoir une longueur d'environ deux mille huit cents millimètres, une largeur d'environ neuf-cents millimètres et une hauteur d'environ mille-deux-cents millimètres. La structure 50 est conçue de manière empilable, c'est-à-dire qu'elle peut être empilée avec d'autres structures 50 identiques.

La structure 50 comprend également une première traverse 60, une deuxième traverse 70, une troisième traverse 80 et une quatrième traverse 90 sensiblement parallèles et qui, ici s'étendent horizontalement pour relier les pieds 51.1 à 54.1 et 51.2 à 54.2. La traverse 60 est rapportée par soudage sur les coins 51.10, 52.10, 53.10 et 54.10 et la traverse 70 est rapportée par soudage sur les coins 51.20, 52.20, 53.20 et 54.20. La traverse 80 relie le milieu de chacun des pieds 51.1, 52.1, 53.1 et 54.1. La traverse 90 relie le milieu de chacun des pieds 51.2, 52.2, 53.2 et 54.2. Les traverses 60, 70, 80 et 90 sont, préférentiellement en acier inoxydable de type 316L. Ainsi, les traverse 60 et 70 sont situées dans un même premier plan horizontal P1 lorsque le dispositif 1 est en appui sur un plan horizontal, tel que représenté en figure 1. La traverse 60 et la traverse 80 sont, quant à elles, situées dans deux plans horizontaux P1 et P2 distincts lorsque le dispositif 1 est en appui sur un plan horizontal.

Les âmes 51.3, 52.3, 53.3 et 54.3 divisent la traverse 60 en trois sections supérieures droites de support 61, 62 et 63. Identiquement, les âmes 51.3, 52.3, 53.3 et 54.3 divisent la traverse 70 en trois sections supérieures gauches de support 71, 72 et 73.

De manière similaire, les pieds 51.1, 52.1, 53.1 et 54.1 divisent la traverse 80 en trois sections inférieures droites de support 81, 82 et 83 et les pieds 51.2, 52.2, 53.2 et 54.2 divisent la traverse 90 en trois sections supérieures gauches de support 91, 92 et 93.

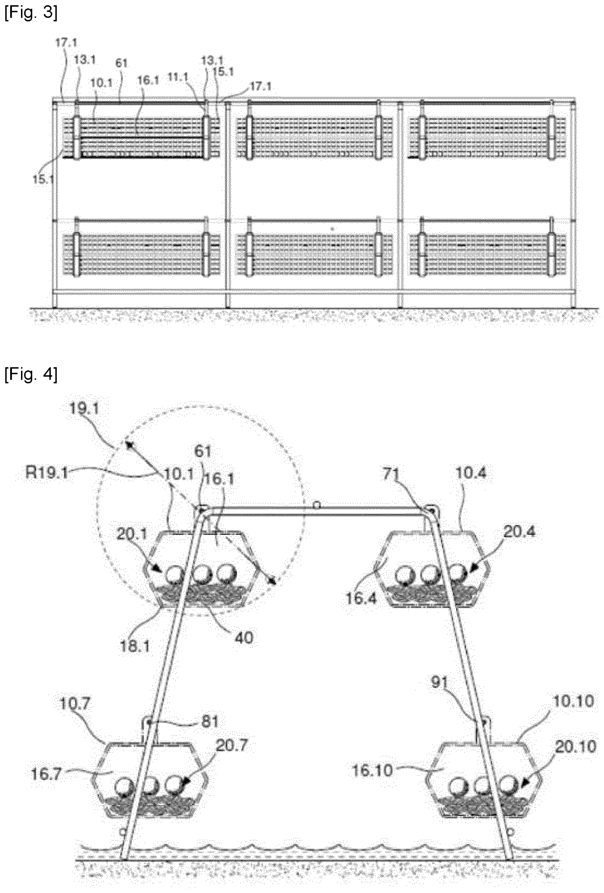

Comme visible en figure 3, le premier casier 10.1 est suspendu par deux bras 11.1 sur la section supérieure de support 61. Les extrémités distales 12.1 des bras 11.1 comprennent chacune une articulation 13.1 pour autoriser une rotation du premier casier 10.1 relativement à la traverse 60. Le premier casier 10.1 possède une section transversale de forme hexagonale et comprend une paroi ajourée 14.1 qui définit, conjointement avec deux portes transversales 15.1, un volume interne 16.1 du casier 10.1. Deux entretoises 17.1 en matière synthétique sont positionnées sur le support 61 pour s'étendre respectivement entre chaque articulations 13.1 et les coins 51.10 et 51.11.

Les casiers 10.2 à 10.12 possèdent une structure identique à celle du casier 10.1 et sont positionnées de manière identique sur les autres supports. Ainsi, le support 62 reçoit le casier 10.2 et le support 63 reçoit le casier 10.3. Les supports haut gauches 71 à 73 reçoivent respectivement les casiers 10.4 à 10.6, les supports bas droits 81 à 83 reçoivent les casiers 10.7 à 10.9 et les supports bas gauches 91 à 93 reçoivent les casiers 10.10 à 10.12.

Comme visible en figure 4, un premier triplet de trois flotteurs 20.1 sphériques en Polyéthylène Haute Densité (PEHD) est placé dans le premier volume interne 16.1 pour constituer un premier élément de flottaison passif 20.1 pouvant se déplacer librement dans le premier volume interne 16.1. Le volume du triplet de flotteurs 20.1 est choisi de manière à provoquer une rotation du casier 10.1, y compris lorsque le volume interne 16.1 comprend un chargement d'huitres 40, lorsque le casier 10.1 est au moins partiellement immergé.

Les volumes internes 16.2 à 16.12 des casiers 10.2 à 10.12 reçoivent, de manière identique, des triplets de trois flotteurs 20.2 à 20.12.

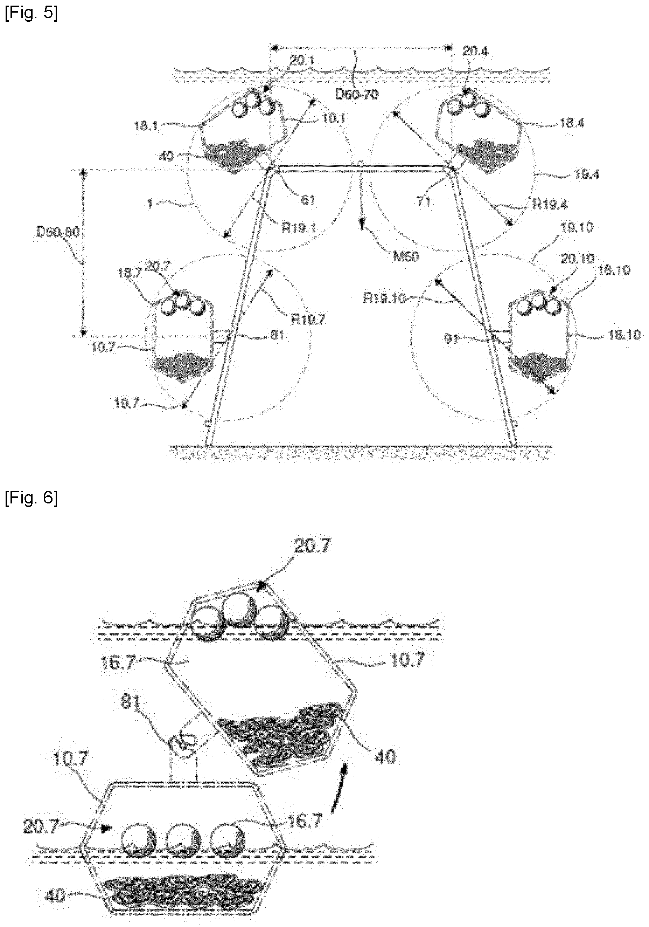

Comme visible sur les coupes des figures4 et 5, le premier casier 10.1 est monté sur le support 61 de manière à ce qu'un premier point distal 18.1 du casier 10.1 - ici une arrête inférieure 18.1 du casier 10.1- décrive une première trajectoire circulaire 19.1 de premier rayon R19.1. Le quatrième casier 10.4 est monté sur le support 71 de manière à ce qu'un quatrième point distal 18.4 du casier 10.4 - ici une arrête inférieure 18.4 du casier 10.4-décrive une quatrième trajectoire circulaire 19.4 de quatrième rayon R19.4. Le septième casier 10.7 est monté sur le support 81 de manière à ce qu'un septième point distal 18.7 du casier 10.7 - ici une arrête inférieure 18.7 du casier 10.7- décrive une septième trajectoire circulaire 19.7 de septième rayon R19.7. Le dixième casier 10.10 est monté sur le support 91 de manière à ce qu'un dixième point distal 18.10 du casier 10.10 - ici une arrête inférieure 18.10 du casier 10.10- décrive une dixième trajectoire circulaire 19.10 de dixième rayon R19.10.

La distance D60-70 séparant la première traverse 60 et la deuxième traverse 70 est au moins égale à la somme du premier rayon R19.1 et du quatrième rayon R19.4, garantissant une absence de chocs entre les casiers 10.1 et 10.4 lors de leurs mouvements respectifs relativement aux traverses 60 et 70. Identiquement, la distance D60-80 séparant la première traverse 60 et la troisième traverse 80 est au moins égale à la somme du premier rayon R19.1 et du septième rayon R19.7, garantissant une absence de chocs entre les casiers 10.1 et 10.7 lors de leurs mouvements respectifs relativement aux traverses 60 et 80. La distance D70-90 séparant la deuxième traverse 70 et la quatrième traverse 90 est au moins égale à la somme du quatrième rayon R19.4 et du dixième rayon R19.10, garantissant une absence de chocs entre les casiers 10.4 et 10.10 lors de leurs mouvements respectifs relativement aux traverses 70 et 90. La distance D60-80 séparant la deuxième traverse 70 et la quatrième traverse 90 est au moins égale à la somme du quatrième rayon R19.4 et du dixième rayon R19.10, garantissant une absence de chocs entre les casiers 10.4 et 10.10 lors de leurs mouvements respectifs relativement aux traverses 70 et 90. La distance D60-80 séparant la première traverse 60 et la troisième traverse 80 est au moins égale à la somme du premier rayon R19.1 et du septième rayon R19.7, garantissant une absence de chocs entre les casiers 10.1 et 10.7 lors de leurs mouvements respectifs relativement aux traverses 60 et 80.

Les matériaux (acier et acier inoxydable) ainsi que les sections des barres utilisées dans la fabrication de la structure de support sont choisis de manière à ce que la masse M50 de la structure 50 exerce un effort statique au moins égal à la poussée de flottaison maximale exercée sur le dispositif 1 lorsque celui-ci est totalement immergé. Le dimensionnement le plus défavorable est obtenu lorsque tous les casiers 10.1 à 10.12 pourvus de leurs flotteurs 20.1 à 20.12 sont installés sur la structure 50. Il est alors inutile de réaliser un piquage des pieds 51.1 à 53.2 du dispositif 1 (enterrement et/ou fixation des pieds au sol).

Selon une première étape d'installation, les casiers 10.1 à 10.12 sont remplis de petites huitres 40 tirées de naissains. Selon une deuxième étape, les flotteurs 20.1 à 20.12 sont placés dans les volumes internes 16.1 à 16.12. Selon une troisième étape, la structure 50 est placée dans une zone d'estran, posée à même le sol. Selon une quatrième étape, les casiers 10.1 à 10.12 sont installés sur les supports 61, 62, 63, 71, 72, 73, 81, 82, 83 et 91, 92, 93 (figure 4).

Le fonctionnement du dispositif 1 sera décrit en référence avec un casier bas 10.7 monté sur la traverse 80 et un casier haut 10.1 monté sur la traverse 60. Les casiers 10.2 à 10.6 montés sur les traverses 60 et 70 adoptent un comportement similaire à celui du casier 10.1 et les casiers 10.8 à 10.12 montés sur les traverses 80 et 90 adoptent un comportement similaire à celui du casier 10.7.

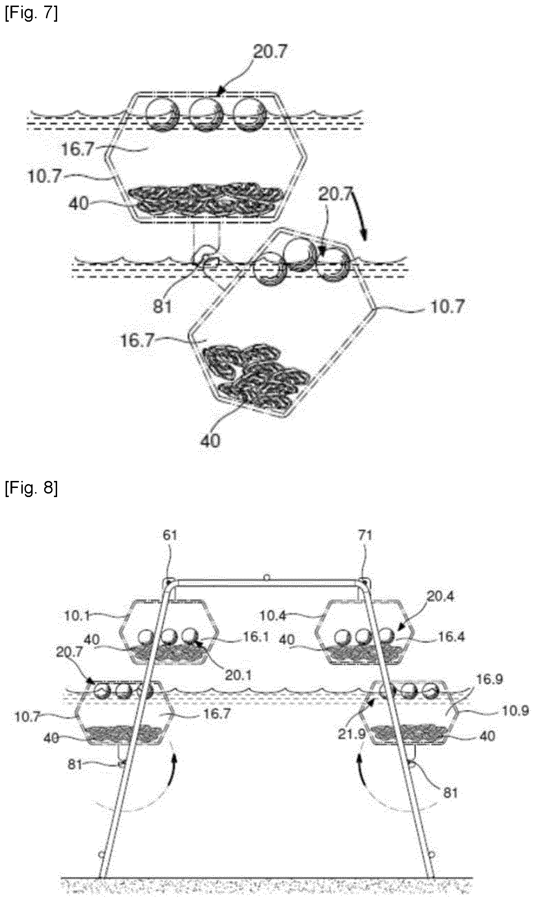

En exploitation, à marée basse, le dispositif 1 est en configuration émergée et aucun des casiers 10.1 à 10.12 n'est en contact avec l'eau (figure 4). La marée montant, le niveau d'eau atteint la partie inférieure du casier 10.7 et s'élève progressivement, jusqu'à ce que l'eau amène les flotteurs 20.7 contre la paroi supérieure du casier 10.7 (figure 6- bas). Avec la poursuite de la montée du niveau de l'eau et l'influence de la houle, les flotteurs 20.7 finissent par être regroupés dans une même portion latérale du casiers 10.7 ce qui provoque une rotation du casier 10.7 autour du support 81 (figure 6 haut), jusqu'à ce que le casier 10.7 soit entièrement immergé et ait alors effectué une rotation de cent-quatre-vingt degrés autour de la traverse 80 (figures 7 et 8). Les huitres 40 contenues dans le casier 10.7 ont alors effectué un roulage complet. Comme illustré aux figures6-7 et notamment grâce à la mobilité des flotteurs dans le volume 16.7, le roulage est particulièrement doux, car les huitres 40 se déplacent dans le volume 16.7 uniquement en situation d'immersion, c'est-à-dire lorsqu'elles sont plongées dans l'eau. Ainsi, en raison de leur flottabilité et de l'amortissement aquatique, les chocs entre les huitres 40 au cours des mouvements de rotation du casier 10.7 sont de faible intensité et évite que les coquilles des huitres 40 soient endommagées au cours du roulage.

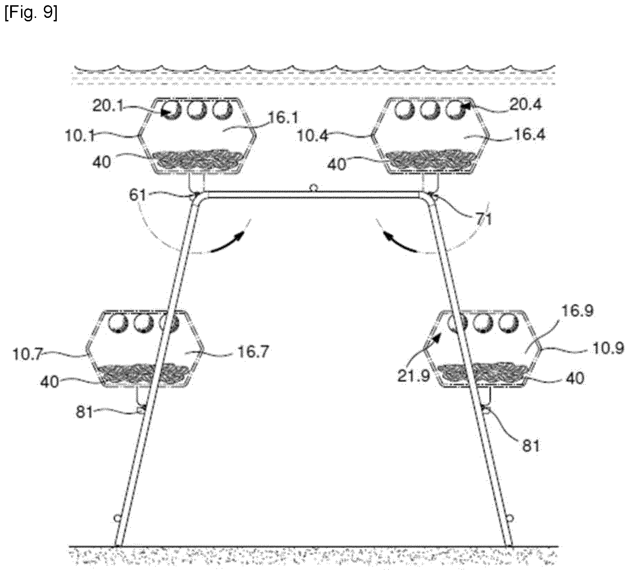

La marée poursuivant sa montée, le niveau d'eau atteint la partie inférieure du casier 10.1 et s'élève progressivement (figure 8), jusqu'à ce que l'eau amène les flotteurs 20.1 contre la paroi supérieure du casier 10.1. Avec la poursuite de la montée du niveau de l'eau et l'influence de la houle, les flotteurs 20.1 finissent par être regroupés dans une même portion latérale du casiers 10.1 ce qui provoque une rotation du casier 10.1 autour du support 61, jusqu'à ce que le casier 10.1 soit entièrement immergé et ait alors effectué une rotation de cent-quatre-vingt degrés autour de la traverse 60 (figure9). Les huitres 40 contenues dans le casier 10.1 ont alors effectué un roulage complet.

Lors de la marée descendante, les mouvements des casiers 10.1 à 10.12 se déroulent de manière inverse. Comme illustré en figure 7, les mouvements des huitres 40 dans les volumes internes 16.1 à 16.12 se font, là encore, principalement quand les huitres 40 sont immergées.

Au cours de la montée des eaux jusqu'à immersion complète des casiers 10.7 à 10.12, la houle provoque un balancement des casiers 10.7 et 10.12 et, conséquemment, un roulage limité des huitres 40.

On obtient alors un dispositif 1 de conchyliculture qui, sur encombrement sensiblement équivalent à celui d'une table d'élevage traditionnel, permet d'accueillir douze casiers 10.1 à 10.7 contre seulement cinq selon les méthodes de l'art antérieur.

La disposition relative des casiers 10.1 à 10.7 évite tout choc entre casiers et assure encore un roulage des huitres sans chocs préjudiciables à une bonne croissance de la coquille.

Il est également possible de placer des casiers sur les traverses basses 80 et 90 ou sur les traverses hautes 60 et 70 selon que l'on souhaite obtenir un effet marémoteur plus prononcé et une durée d'immersion plus importante (traverses basses 80 et 90) ou plus limité (traverses hautes 60 et 70) selon que l'on souhaite favoriser le développement de la coquille ou du muscle des huitre 40.

Bien entendu, l'invention n'est pas limitée aux modes de réalisation décrits mais englobe toute variante entrant dans le champ de l'invention telle que définie par les revendications. En particulier,
- bien qu'ici les casiers soient de section hexagonale, l'invention s'applique également à d'autres types de casiers tels que des casiers de section rectangulaire, circulaire ou quelconque ou même les sacs traditionnels de conchyliculture ;
- bien qu'ici l'élément de flottaison comprenne trois sphères en PEHD, l'invention s'applique également à d'autres types d'élément de flottaison, comme par exemple un élément de flottaison comprenant un unique flotteur, deux ou plus de trois. Les flotteurs peuvent être également en mousse basse densité et/ou de forme différente, par exemple sous la forme de polyèdre favorisant le roulage ;
- bien qu'ici le dispositif ait été décrit en lien avec un élevage à partir d'huitres provenant de naissains, l'invention s'applique également à des huitres d'origine différentes comme par exemple des huitres provenant de prégrossis, demi-élevage ou consommables à affiner
- bien qu'ici le dispositif ait été décrit en lien avec l'élevage huitrier, l'invention s'applique également à d'autres types de conchyliculture comme par exemple l'élevage de moules, de palourdes ou encore d'ormeaux.

## Revendications

1. Dispositif (1) de conchyliculture comprenant :
- une structure de support (50) comprenant une première traverse (60) et une deuxième traverse (70, 80) sensiblement parallèles ;
- un premier casier (10.1) définissant un premier volume interne (16.1) et qui est monté à rotation relativement à la première traverse (60) ;
- un deuxième casier (10.4, 10.7) définissant un deuxième volume interne (16.4, 16.7) et qui est monté à rotation relativement à la deuxième traverse (70,80) ; dans lequel
un premier élément de flottaison passif (20.1) est placé dans le premier casier (10.1) de manière à pouvoir se déplacer librement dans le premier volume interne (16.1) et provoquer une rotation du premier casier (10.1) lorsque celui-ci est au moins partiellement immergé et/ou un deuxième élément de flottaison passif (20.4, 20.7) est placé dans le deuxième casier (10.4, 10.7) de manière à pouvoir se déplacer librement dans le deuxième volume interne (16.4, 16.7) et provoquer une rotation du deuxième casier (10.4, 10.7) lorsque celui-ci est au moins partiellement immergé.

2. Dispositif (1) selon la revendication 1, dans lequel le premier élément de flottaison (20.1) comprend une pluralité de flotteurs.

3. Dispositif (1) selon la revendication 2, dans lequel les flotteurs sont de forme sphérique et/ou en matière synthétique, préférentiellement du Polyéthylène Haute Densité.

4. Dispositif (1) selon l'une quelconque des revendications précédentes, dans lequel :
- le premier casier (10.1) étant monté de manière à ce qu'un premier point distal (18.1) du premier casier (10.1) décrive une première trajectoire circulaire (19.1) de premier rayon (R19.1) ; et
- le deuxième casier (10.4, 10.7) étant monté de manière à ce qu'un deuxième point distal (18.4, 18.7) du deuxième casier (10.4, 10.7) décrive une deuxième trajectoire circulaire (19.4, 19.7) de deuxième rayon (R19.4, R19.7) ;
la distance (D60-70) séparant la première traverse (60) et la deuxième traverse (70) est au moins égale à la somme du premier rayon (R19.1) et du deuxième rayon (R19.4, R19.7).

5. Dispositif (1) selon l'une quelconque des revendications précédentes, dans lequel la première traverse (60) et la deuxième traverse (70) sont situées dans un même premier plan horizontal (P1) lorsque le dispositif (1) est en appui sur un plan horizontal.

6. Dispositif (1) selon l'une quelconque des revendications 1 à 4, dans lequel la première traverse (60) et la deuxième traverse (80) sont situées dans deux plans horizontaux distincts (P1, P2) lorsque le dispositif (1° est en appui sur un plan horizontal.

7. Dispositif (1) selon l'une quelconque des revendications 1 à 5, dans lequel la structure de support (50) comprend une troisième traverse (80) et une quatrième traverse (90), le dispositif (1) comprenant également un troisième casier (10.7) définissant un troisième volume interne (16.7) et qui est monté à rotation relativement à la troisième traverse (80) ;
- un quatrième casier (10.10) définissant un quatrième volume interne (16.10) et qui est monté à rotation relativement à la quatrième traverse (90) ; dans lequel
un troisième élément de flottaison passif (21.7) est placé dans le troisième casier (10.7) de manière à pouvoir se déplacer librement dans le troisième volume interne (16.7) et provoquer une rotation du troisième casier (10.7) lorsque celui-ci est au moins partiellement immergé ; et
un quatrième élément de flottaison passif (21.10) est placé dans le quatrième casier (10.10) de manière à pouvoir se déplacer librement dans le quatrième volume interne (16.10) et provoquer une rotation du quatrième casier (10.10) lorsque celui-ci est au moins partiellement immergé.

8. Dispositif (1) selon l'une quelconque des revendications précédentes, dans lequel la structure de support (50) est dimensionnée de manière à ce que sa masse (M50) exerce un effort statique au moins égal à la poussée de flottaison maximale exercée sur le dispositif (1° lorsque celui-ci est totalement immergé.

9. Dispositif (1) selon l'une quelconque des revendications précédentes, dans lequel la structure de support (50) est agencé pour être empilable et possède une longueur sensiblement égale à trois mètres et une largeur sensiblement égale à 1,2 mètres.

10. Procédé d'élevage conchylicole de coquillages (40) placés dans le premier casier (10.1) et le deuxième casier (10.4, 10.7) d'un dispositif selon l'une quelconque des revendications 1 à 9, un premier élément de flottaison passif (20.1) étant placé dans le premier casier (10.1) de manière à pouvoir se déplacer librement dans le premier volume interne (16.1) et provoquer une rotation du premier casier (10.1) lorsque celui-ci est au moins partiellement immergé et un deuxième élément de flottaison passif (20.4, 20.7) est placé dans le deuxième casier (10.4, 10.7) de manière à pouvoir se déplacer librement dans le deuxième volume interne (16.4, 16.7) et provoquer une rotation du deuxième casier (10.4, 10.7) lorsque celui-ci est au moins partiellement, dans lequel des opérations roulage des coquillages (40) sont réalisées par le déplacement du premier élément de flottaison (20.1) à l'intérieur du premier volume interne (16.1) et par le déplacement du deuxième élément de flottaison (20.4, 20.7) à l'intérieur du deuxième volume interne (16.4, 16.7) lors des phases d'immersion et d'émersion du premier casier (10.1) et du deuxième casier (10.4, 10.7).
